# EUROPEAN PATENT SPECIFICATION

(11) **EP 2 623 877 B1**
(45) Date of publication and mention of the grant of the patent: **11.12.2019**
(21) Application number: 10857808.9
(22) Date of filing: 28.09.2010
(51) Int. Cl.: F24F 7/08

(54) **HEAT EXCHANGE AND VENTILATION DEVICE**
WÄRMETAUSCH- UND BELÜFTUNGSVORRICHTUNG
DISPOSITIF ÉCHANGEUR DE CHALEUR ET DE VENTILATION

(43) Date of publication of application: 07.08.2013
(73) Proprietor: Mitsubishi Electric Corporation, Tokyo 100-8310 (JP)
(72) Inventor: MATSUMOTO, Kohei, Tokyo 100-8310 (JP); IWAGUCHI, Taisuke, Tokyo 102-0073 (JP); KOMIYAMA, Hiroto, Tokyo 112-0004 (JP)
(74) Representative: Pfenning, Meinig & Partner mbB
(86) International application number: PCT/JP2010/066811
(87) International publication number: WO 2012/042593

(56) References cited:
- EP-A1- 2 053 317
- EP-A1- 2 206 977
- WO-A1-81/03064
- JP-A- 3 267 640
- JP-A- 4 263 729
- JP-A- 2000 283 517
- JP-A- 2003 004 277
- JP-A- 2003 336 881
- JP-A- 2008 185 332
- JP-U- H0 468 942

## Description

### Field

The present invention relates to a heat exchange and ventilation device that performs heat exchange by simultaneously supplying and discharging air through a heat exchange element.

### Background

A heat exchange and ventilation device has a heat exchange element incorporated therein, where the heat exchange element performs air-to-air heat exchange, and performs ventilation by simultaneously supplying and discharging air while performing heat exchange. For example, Patent Literature 1 and Patent Literature 2 disclose a heat exchange and ventilation device installed and used on a floor in a building.

In such a floor-type heat exchange and ventilation device, a maintenance panel provided on a front surface of the product is removed at the time of maintenance to replace a blower, a heat exchanger, and a filter, and to clean an air passage inside the device.

EP 2 053 317 A1 discloses a ventilation device with a top face plate of a casing which is provided with an outdoor inlet opening, an indoor inlet opening, an indoor air supply opening and an outdoor air exhaust opening, where respective ducts are connected to the openings. The ventilation device comprises a removable front face panel which allows the access to further components of the ventilation device such as heat exchangers, a filter, and an electric component box. Viewed from the front side, the outdoor inlet opening is arranged behind the indoor inlet opening and the air exhaust opening is arranged behind the indoor air supply opening. A ventilation device comprising a similar casing is disclosed in EP 2 206 977 A2.

### Citation List

### Patent Literatures

Patent Literature 1: Japanese Patent Application Laid-open No. 2008-116170
Patent Literature 2: Japanese Patent Publication No. 3837988

### Summary

### Technical Problem

However, with a product configuration according to the above conventional technique, a maintenance panel covers only a part of a front surface or a back surface of the product, and even when the maintenance panel is removed, only a part of an air passage is exposed. Therefore, there is a problem in that cleaning of the air passage and replacement of a blower are difficult.

The present invention has been made to solve the above problems, and an object of the present invention is to provide a heat exchange and ventilation device that can facilitate cleaning of the entire air passage and enhance the maintainability.

### Solution to Problem

To solve the above described problems and achieve the object a heat exchange and ventilation device of a floor-type according to the present invention includes: a body casing that constitutes a body shell; an air-supply passage that extends from an outside-air inlet port provided on the body casing and serving as an entrance end to an air-supply outlet port provided on the body casing and serving as an exit end, and supplies exterior air to an interior via inside of the body casing; an air-discharge passage that extends from a circulated-air inlet port provided on the body casing and serving as an entrance end to an air-discharge outlet port provided on the body casing and serving as an exit end, and discharges interior air to an exterior via inside of the body casing; an air-supply blower that forms an air-supply flow in the air-supply passage, which is directed from the entrance end to the exit end thereof; an air-discharge blower that forms an air-discharge flow in the air-discharge passage, which is directed from the entrance end to the exit end thereof; and a heat exchanger that is provided within the body casing and performs heat exchange between exterior air passing through the air-supply passage and interior air passing through the air-discharge passage, and one surface side of the body casing is made to be an opening in its substantial entirety, and a substantially entire area of at least one of the air-supply passage and the air-discharge passage is exposed to the opening, and the heat exchange and ventilation device further comprises a maintenance panel that covers the opening from a front surface of the body casing in an attachable/detachable manner.

### Advantageous Effects of Invention

In the heat exchange and ventilation device according to the present invention, the substantially entire area of at least one of air passages is exposed by removing a maintenance panel. Therefore, facilitation in cleaning of the entire air passage and enhancement in the maintainability can be achieved.

### Brief Description of Drawings

FIG. 1 is a perspective view of an external appearance of a heat exchange and ventilation device according to a first embodiment of the present invention.
FIG. 2 is a perspective view of the heat exchange and ventilation device in a state where a maintenance panel is removed.
FIG. 3 is a front view of the heat exchange and ventilation device in a state where the maintenance panel is removed.
FIG. 4 is a plan view of the heat exchange and ventilation device.
FIG. 5 is a cross-sectional view taken along a line A-A shown in FIG. 4, schematically depicting a cross-sectional configuration of the heat exchange and ventilation device.
FIG. 6 is a cross-sectional view taken along a line B-B shown in FIG. 4, schematically depicting a cross-sectional configuration of the heat exchange and ventilation device.
FIG. 7 is a cross-sectional view taken along a line C-C shown in FIG. 4, schematically depicting a cross-sectional configuration of the heat exchange and ventilation device.
FIG. 8 is a cross-sectional view taken along a line D-D shown in FIG. 4, schematically depicting a cross-sectional configuration of the heat exchange and ventilation device.
FIG. 9 is a perspective view of a passage partition member.
FIG. 10 is a front view of the heat exchange and ventilation device in a state where the maintenance panel is removed, exemplifying a state of the heat exchange and ventilation device at the time of maintenance.

### Description of Embodiments

Exemplary embodiments of a heat exchange and ventilation device according to the present invention will be explained below in detail with reference to the accompanying drawings. The present invention is not limited to the embodiments.

### First embodiment.

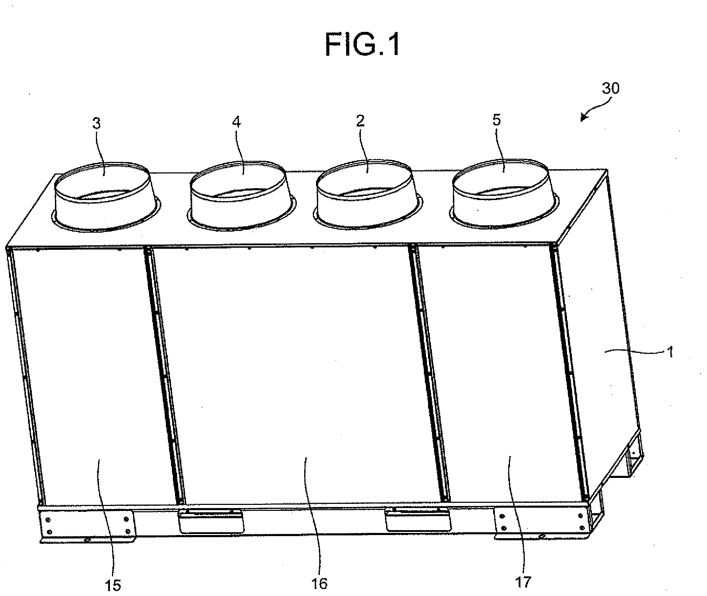

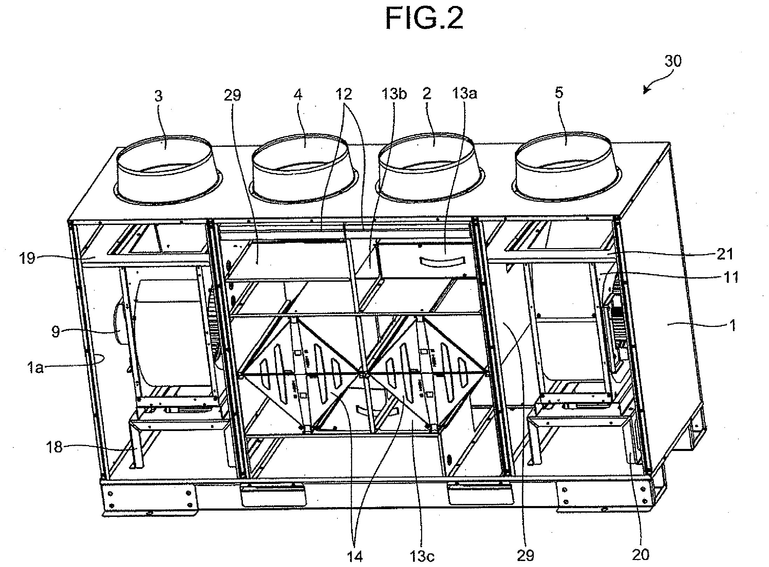

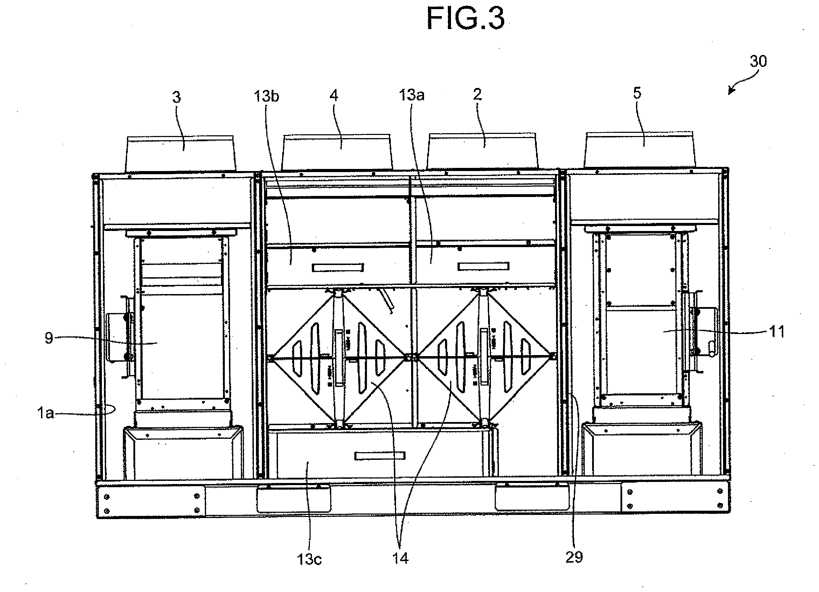

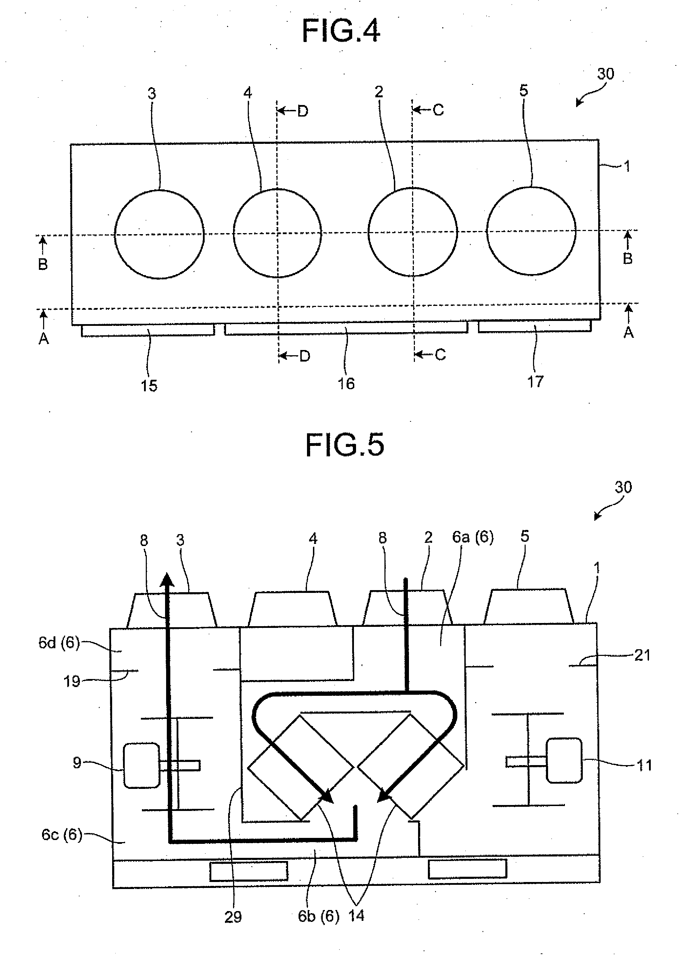

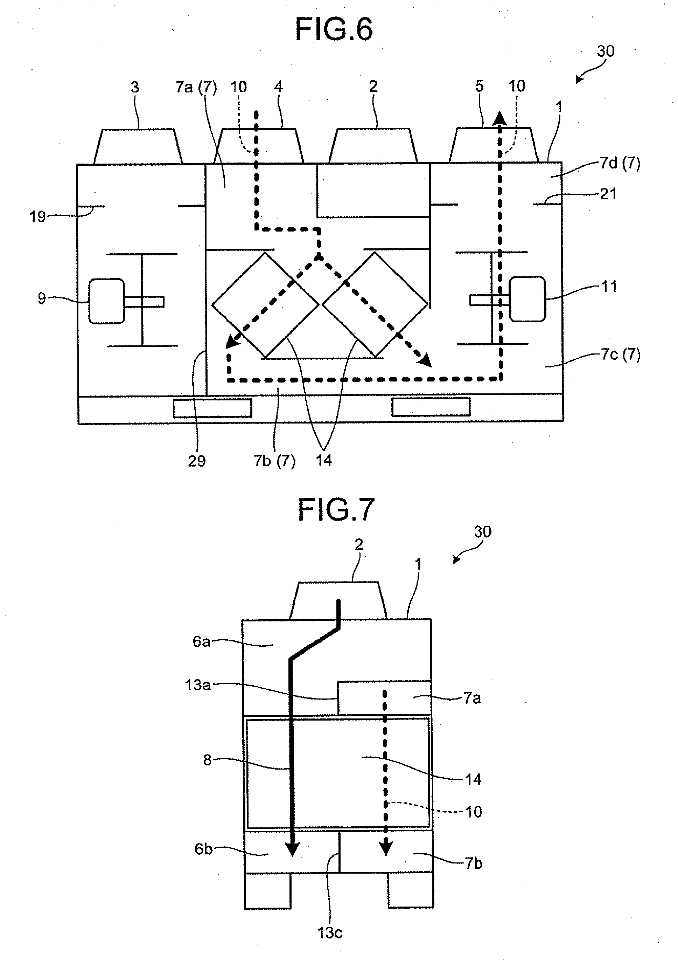

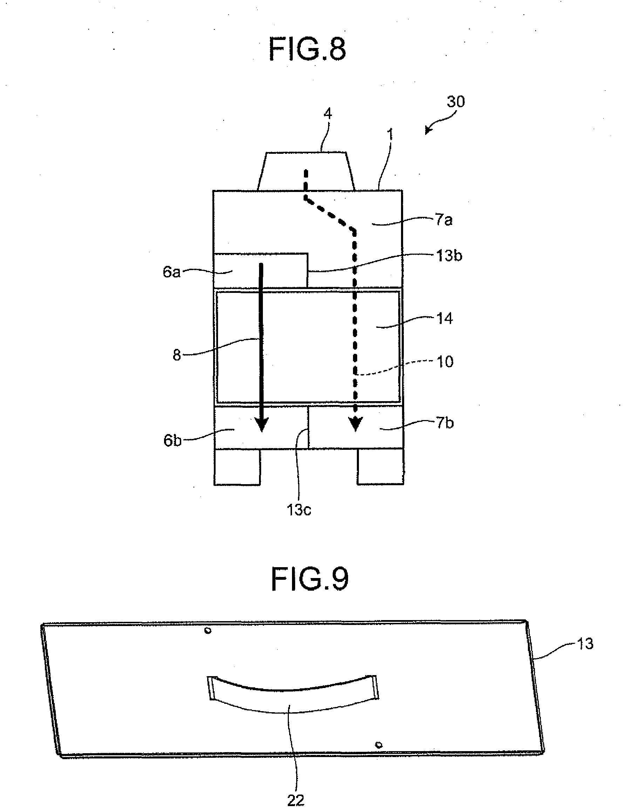

FIG. 1 is a perspective view of an external appearance of a heat exchange and ventilation device according to a first embodiment of the present invention. FIG. 2 is a perspective view of the heat exchange and ventilation device in a state where a maintenance panel is removed. FIG. 3 is a front view of the heat exchange and ventilation device in a state where the maintenance panel is removed. FIG. 4 is a plan view of the heat exchange and ventilation device. FIG. 5 is a cross-sectional view taken along the line A-A shown in FIG. 4, schematically depicting a cross-sectional configuration of the heat exchange and ventilation device. FIG. 6 is a cross-sectional view taken along the line B-B shown in FIG. 4, schematically depicting a cross-sectional configuration of the heat exchange and ventilation device. FIG. 7 is a cross-sectional view taken along the line C-C shown in FIG. 4, schematically depicting a cross-sectional configuration of the heat exchange and ventilation device. FIG. 8 is a cross-sectional view taken along the line D-D shown in FIG. 4, schematically depicting a cross-sectional configuration of the heat exchange and ventilation device.

In a heat exchange and ventilation device 30, heat exchangers 14 that perform exterior-air to interior-air heat exchange are installed within a body casing 1 formed into a cuboid shape. The heat exchange and ventilation device 30 performs interior ventilation by simultaneously supplying and discharging air while performing heat exchange between supplied air and discharged air. The heat exchange and ventilation device 30 is a floor-type ventilation device installed on a floor of a machine room in a building, for example.

In the body casing 1 that constitutes a body housing of the heat exchange and ventilation device 30, an air-supply passage 6 and an air-discharge passage 7 are formed. The air-supply passage 6 extends from an outside-air inlet port 2, provided on an upper surface of the body casing 1 and serving as an entrance end, to an air-supply outlet port 3 provided on the upper surface of the body casing 1 and serving as an exit end via the inside of the body casing 1, and supplies exterior air to the interior. The air-discharge passage 7 extends from a circulated-air inlet port 4, provided on the upper surface of the body casing 1 and serving as an entrance end, to an air-discharge outlet port 5 provided on the upper surface of the body casing 1 and serving as an exit end via the inside of the body casing 1, and discharges interior air to the exterior.

The entire front surface of the body casing 1 is a maintenance opening 1a. Because the entire front surface of the body casing 1 is the maintenance opening 1a, the inside of the body casing 1 is exposed in its entirety through the maintenance opening 1a.

The maintenance opening 1a is covered by a plurality of maintenance panels 15, 16, and 17. The maintenance panels 15, 16, and 17 are provided attachably to and detachably from the maintenance opening 1a. For example, the maintenance panels 15, 16, and 17 are fastened by screws to the body casing 1. The maintenance opening 1a may be covered by a single maintenance panel.

The maintenance panel 15 covers an air-supply blower 9, an air-supply blower passage 6c, and an air-supply outlet passage 6d. The maintenance panel 16 covers the heat exchangers 14, a filter 12, a heat-exchanger upstream-side air-supply passage 6a, a heat-exchanger downstream-side air-supply passage 6b, a heat-exchanger upstream-side air-discharge passage 7a, and a heat-exchanger downstream-side air-discharge passage 7b. The maintenance panel 17 covers an air-discharge blower 11, an air-discharge blower passage 7c, and an air-discharge outlet passage 7d.

The air-supply passage 6 is configured to include the heat-exchanger upstream-side air-supply passage 6a, the heat-exchanger downstream-side air-supply passage 6b, the air-supply blower passage 6c, and the air-supply outlet passage 6d. The heat-exchanger upstream-side air-supply passage 6a constitutes a space between immediately after the outside-air inlet port 2 and immediately before the heat exchangers 14. The heat-exchanger downstream-side air-supply passage 6b constitutes a space between immediately after the heat exchangers 14 and immediately before the air-supply blower 9. The air-supply blower passage 6c constitutes a space around the air-supply blower 9. The air-supply outlet passage 6d constitutes a space between immediately after the air-supply blower 9 and the air-supply outlet port 3.

The heat-exchanger upstream-side air-supply passage 6a and the heat-exchanger downstream-side air-supply passage 6b are formed on a back side of the maintenance panel 16. The air-supply blower passage 6c and the air-supply outlet passage 6d are formed on a back side of the maintenance panel 15.

The air-discharge passage 7 is configured to include the heat-exchanger upstream-side air-discharge passage 7a, the heat-exchanger downstream-side air-discharge passage 7b, the air-discharge blower passage 7c, and the air-discharge outlet passage 7d. The heat-exchanger upstream-side air-discharge passage 7a constitutes a space between immediately after the circulated-air inlet port 4 and immediately before the heat exchangers 14. The heat-exchanger downstream-side air-discharge passage 7b constitutes a space between immediately after the heat exchangers 14 and immediately before the air-discharge blower 11. The air-discharge blower passage 7c constitutes a space around the air-discharge blower 11. The air-discharge outlet passage 7d constitutes a space between immediately after the air-discharge blower 11 and the air-discharge outlet port 5.

The heat-exchanger upstream-side air-discharge passage 7a and the heat-exchanger downstream-side air-discharge passage 7b are formed on the back side of the maintenance panel 16. The air-discharge blower passage 7c and the air-discharge outlet passage 7d are formed on a back side of the maintenance panel 17.

As described above, the air-supply blower 9 is provided in the air-supply blower passage 6c. The air-supply blower 9 generates an air-supply flow 8 directed from the entrance end (the outside-air inlet port 2) to the exit end (the air-supply outlet port 3) of the air-supply passage 6. As described above, the air-discharge blower 11 is provided in the air-discharge blower passage 7c. The air-discharge blower 11 forms an air-discharge flow 10 directed from the entrance end (the circulated-air inlet port 4) to the exit end (the air-discharge outlet port 5) of the air-discharge passage 7.

As described above, the air-supply blower 9 is provided in the air-supply blower passage 6c. The air-supply blower 9 is fixed by screws to an air-supply blower base 18 formed in the air-supply blower passage 6c and to an air-supply outlet-portion partition member 19. When the screws fixing the air-supply blower 9 are removed, the air-supply blower 9 can be easily slid towards the front-surface side. Therefore, it is possible to easily pull the air-supply blower 9 out of the body casing 1 through the maintenance opening 1a.

The screws fixing the air-supply blower 9 are different in color and size from other screws used in the heat exchange and ventilation device 30. Therefore, it is possible for a worker to easily distinguish the screws fixing the air-supply blower 9 from other screws.

As described above, the air-discharge blower 11 is provided in the air-discharge blower passage 7c. The air-discharge blower 11 is fixed by screws to an air-discharge blower base 20 formed in the air-discharge blower passage 7c and to an air-discharge outlet-portion partition member 21. When the screws fixing the air-discharge blower 11 are removed, the air-discharge blower 11 can be easily slid towards the front-surface side. Therefore, it is possible to easily pull the air-discharge blower 11 out of the body casing 1 through the maintenance opening 1a.

The screws fixing the air-discharge blower 11 are different in color and size from other screws used in the heat exchange and ventilation device 30. Therefore, it is possible for a worker to easily distinguish the screws fixing the air-discharge blower 11 from other screws.

The filter 12, incorporated in the air-supply passage 6 and the air-discharge passage 7 and captures dust and the like contained in the air-supply flow 8 and the air-discharge flow 10, is provided within the body casing 1. The filter 12 can be slid towards the front-surface side. Therefore, it is possible to easily pull the filter 12 out of the body casing 1 through the maintenance opening 1a.

As illustrated in FIGS. 7 and 8, a part of the air-supply passage 6 and a part of the air-discharge passage 7 face each other in a front-rear direction within the body casing 1. More specifically, the heat-exchanger upstream-side air-supply passage 6a and the heat-exchanger downstream-side air-supply passage 6b face with the heat-exchanger upstream-side air-discharge passage 7a and the heat-exchanger downstream-side air-discharge passage 7b in a front-rear direction.

In the present embodiment, the heat-exchanger upstream-side air-supply passage 6a and the heat-exchanger downstream-side air-supply passage 6b are disposed frontward than the heat-exchanger upstream-side air-discharge passage 7a and the heat-exchanger downstream-side air-discharge passage 7b are, that is, disposed closer to a side of the maintenance opening 1a. The heat-exchanger upstream-side air-discharge passage 7a and the heat-exchanger downstream-side air-discharge passage 7b may be disposed closer to the side of the maintenance opening 1a.

FIG. 9 is a perspective view of passage partition members 13a, 13b, and 13c. The passage partition members 13a, 13b, and 13c that partition the air-supply passage 6 and the air-discharge passage 7 in a front-rear direction are provided within the body casing 1 in a portion where the air-supply passage 6 and the air-discharge passage 7 face each other in a front-rear direction.

The passage partition member 13a is a member that partitions the heat-exchanger upstream-side air-supply passage 6a and the heat-exchanger upstream-side air-discharge passage 7a in a front-rear direction, and is provided immediately below the outside-air inlet port 2. The passage partition member 13b is a member that partitions the heat-exchanger upstream-side air-supply passage 6a and the heat-exchanger upstream-side air-discharge passage 7a in a front-rear direction, and is provided immediately below the circulated-air inlet port 4. The passage partition member 13c is a member that partitions the heat-exchanger downstream-side air-supply passage 6b and the heat-exchanger downstream-side air-discharge passage 7b in a front-rear direction, and is provided immediately below the heat exchangers 14.

The passage partition members 13a, 13b, and 13c are fixed by screws to another passage partition member provided around the passage partition members 13a, 13b, and 13c, for example, to a partition member 29 that partitions the air-supply passage 6 and the air-discharge passage 7 in a vertical or horizontal direction. When the screws fixing the passage partition members 13a, 13b, and 13c are removed, the passage partition members 13a, 13b, and 13c can be easily removed. Therefore, it is possible to easily pull the passage partition members 13a, 13b, and 13c out of the body casing 1 through the maintenance opening 1a.

The screws fixing the passage partition members 13a, 13b, and 13c are different in color and size from other screws used in the heat exchange and ventilation device 30. Therefore, it is possible for a worker to easily distinguish the screws fixing the passage partition members 13a, 13b, and 13c from other screws.

A handle member 22 (for example, a handle made of plastics) is attached to each of the passage partition members 13a, 13b, and 13c, unlike the other partition member 29 provided around them. Therefore, it is possible for a worker to easily distinguish the passage partition members 13a, 13b, and 13c from other partition members.

The heat exchangers 14 that performs exterior-air to interior-air heat exchange, that is, heat exchange between the air-supply flow 8 and the air-discharge flow 10 is provided within the body casing 1. The heat exchangers 14 can be slid towards the front-surface side and pulled out. Therefore, it is possible to easily pull out the heat exchangers 14 through the maintenance opening 1a.

The heat exchangers 14 are arranged horizontally from each other when viewed from the front side (the side of the maintenance opening 1a). Therefore, the product height of the heat exchange and ventilation device 30 can be reduced as compared to arranging the heat exchangers 14 vertically. As the product height of the heat exchange and ventilation device 30 is reduced, the flexibility of duct work is increased. The heat exchange and ventilation device 30 is easily installed even in a location with a low ceiling, and the workability can be enhanced. Furthermore, the maintainability can be enhanced. Further, because the product has a low center of gravity, the carrying performance can be enhanced.

Next, a maintenance procedure of the heat exchange and ventilation device 30 will be explained. First, the maintenance panel 15 is removed to remove the air-supply blower 9. As described above, the air-supply blower 9 can be easily pulled out of the body casing 1 through the maintenance opening 1a by removing the screws.

Next, the maintenance panel 16 is removed to take out the heat exchangers 14 and the filter 12. The passage partition members 13a, 13b, and 13c are then removed. As described above, the passage partition members 13a, 13b, and 13c can be easily pulled out of the body casing 1 through the maintenance opening 1a by removing the screws.

Next, the maintenance panel 17 is removed to remove the air-discharge blower 11. As described above, the air-discharge blower 11 can be easily pulled out of the body casing 1 through the maintenance opening 1a by removing the screws.

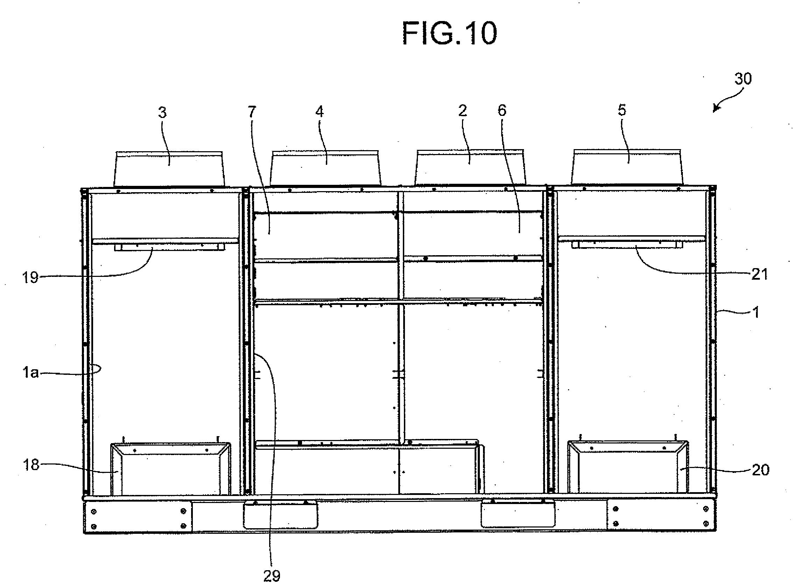

FIG. 10 is a front view of the heat exchange and ventilation device in a state where a maintenance panel is removed, exemplifying a state of the heat exchange and ventilation device at the time of maintenance. By following the above procedure, the heat exchange and ventilation device 30 is in a state shown in FIG. 10. The most part of the air-supply passage 6 and the air-discharge passage 7 within the body casing 1 are exposed to the maintenance opening 1a. With this configuration, a majority area of the air passages within the body casing 1 can be easily cleaned.

As described above, because the majority area of the air passages within the body casing 1 can be easily cleaned, dust, dirt and the like are hardly deposited in the air passages. With this configuration, dust, dirt, and the like can be prevented from being supplied to the interior by the air-supply flow 8, and therefore the interior environment is easily kept hygienic. In addition, because dust, dirt, and the like can be prevented from being discharged to the exterior by the air-discharge flow 10, contamination of the environment around a building can be suppressed.

In the maintenance procedure described above, even when the passage partition members 13a, 13b, and 13c are not removed, a majority area of the air-supply passage 6 is exposed to the maintenance opening 1a. Therefore, the majority area of the air-supply passage 6 can be easily cleaned without removing the passage partition members 13a, 13b, and 13c, and the interior environment can be kept hygienic.

In contrast, in a case where the air-discharge passage 7 is disposed frontwards than the air-supply passage 6 is, a majority area of the air-discharge passage 7 is exposed to the maintenance opening 1a even when the passage partition members 13a, 13b, and 13c are not removed. Therefore, the air-discharge passage 7 can be easily cleaned without removing the passage partition members 13a, 13b, and 13c, and contamination of the environment around a building can be suppressed.

Furthermore, the maintenance opening 1a may be provided on a back-surface side of the body casing 1, or on both the front-surface side and the back-surface side of the body casing 1. When the heat exchange and ventilation device 30 is installed in a sufficient planar space, a working space can be secured to easily remove a maintenance panel that covers the front-surface side and the back-surface side. In this case, when the maintenance panels 15, 16, and 17 that cover the front-surface side and the back-surface side are removed, both the air-supply passage 6 and the air-discharge passage 7 can be easily cleaned without removing the passage partition members 13a, 13b, and 13c.

### Industrial Applicability

As described above, the heat exchange and ventilation device according to the present invention is useful as a heat exchange and ventilation device to be installed in a machine room and the like.

### Reference Signs List

1 body casing
1a maintenance opening
2 outside-air inlet port
3 air-supply outlet port
4 circulated-air inlet port
5 air-discharge outlet port
6 air-supply passage
6a heat-exchanger upstream-side air-supply passage
6b heat-exchanger downstream-side air-supply passage
6c air-supply blower passage
6d air-supply outlet passage
7 air-discharge passage
7a heat-exchanger upstream-side air-discharge passage
7b heat-exchanger downstream-side air-discharge passage
7c air-discharge blower passage
7d air-discharge outlet passage
8 air-supply flow
9 air-supply blower
10 air-discharge flow
11 air-discharge blower
12 filter
13a, 13b, 13c passage partition member
14 heat exchangers
15, 16, 17 maintenance panel
18 air-supply blower base
19 air-supply outlet-portion partition member
20 air-discharge blower base
21 air-discharge outlet-portion partition member
22 handle member
29 partition member
30 heat exchange and ventilation device

## Claims

1. A heat exchange and ventilation device (30) of a floor-type comprising:
a body casing (1) that constitutes a body shell;
an air-supply passage that extends from an outside-air inlet port (2) provided on the body casing (1) and serving as an entrance end to an air-supply outlet port provided on the body casing (1) and serving as an exit end, and supplies exterior air to an interior via inside of the body casing (1);
an air-discharge passage that extends from a circulated-air inlet port (4) provided on the body casing (1) and serving as an entrance end to an air-discharge outlet port (5) provided on the body casing (1) and serving as an exit end, and discharges interior air to an exterior via inside of the body casing (1);
an air-supply blower (9) that forms an air-supply flow in the air-supply passage, which is directed from the entrance end to the exit end thereof;
an air-discharge blower (11) that forms an air-discharge flow in the air-discharge passage, which is directed from the entrance end to the exit end thereof;
heat exchangers (14) that are provided within the body casing (1) and perform heat exchange between exterior air passing through the air-supply passage and interior air passing through the air-discharge passage and
a passage partition member (13a, 13b, 13c) that partitions the air-supply passage and the air-discharge passage, wherein
one surface side of the body casing (1) is made to be an opening (1a) in its substantial entirety,
wherein the heat exchange and ventilation device (30) further comprises a maintenance panel (15, 16, 17) that covers the opening (1a) from a front surface of the body casing (1) in an attachable/detachable manner, and
at least a part of one of the air-supply passage and the air-discharge passage is formed on a rear side of the other air passage with respect to the passage partition member (13a, 13b, 13c), the rear side being opposite to the one surface side,
**characterized in that**
substantially entire area of at least one of the air-supply passage and the air-discharge passage is exposed to the opening (1a), and
the passage partition member (13a, 13b, 13c) is attachable and detachable through the opening (la), and when the partition member (13a, 13b, 13c) is removed, a substantially entire area of the air-supply passage and the air-discharge passage is exposed from the opening (1a), wherein
the outside-air inlet port (2), the air-supply outlet port (3), the circulated-air inlet port (4), and the air-discharge outlet port (5) are formed on another surface side different from the one surface side.

2. The heat exchange and ventilation device (30) according to claim 1, wherein any of the heat exchangers (14), the air-supply blower (9), and the air-discharge blower (11) can be pulled out through the opening (1a).

3. The heat exchange and ventilation device (30) according to claim 1, wherein a screw fixing the partition member (13a, 13b, 13c) is different in color or size from other screws used therein.

## Patentansprüche

1. Wärmetausch- und Belüftungseinrichtung (30) eines Bodentyps, umfassend:
ein Körpergehäuse (1), das eine Körperhülle bildet;
einen Luftzufuhrdurchgang, der sich von einer an dem Körpergehäuse (1) vorgesehenen Außenlufteinlassöffnung (2) dienend als Eingangsende zu einer an dem Körpergehäuse (1) vorgesehenen Luftzufuhrauslassöffnung dienend als Ausgangsende erstreckt, und einem Innenraum über die Innenseite des Körpergehäuses (1) Luft von außen zuführt;
einen Luftabführdurchgang, der sich von einer an dem Körpergehäuse (1) vorgesehenen Umwälzlufteinlassöffnung (4) dienend als Eingangsende zu einer an dem Körpergehäuse (1) vorgesehenen Luftabführauslassöffnung (5) dienend als Ausgangsende erstreckt, und Innenraumluft über die Innenseite des Körpergehäuses (1) nach außen abführt;
ein Luftzufuhrgebläse (9), das einen Luftzufuhrstrom im Luftzufuhrdurchgang bildet, der vom Eingangsende zum Ausgangsende desselben gerichtet ist;
ein Luftabführgebläse (11), das einen Luftabführstrom im Luftabführdurchgang bildet, der vom Eingangsende zum Ausgangsende desselben gerichtet ist;
Wärmetauscher (14), die innerhalb des Körpergehäuses (1) vorgesehen sind und Wärmetausch zwischen Außenluft, die durch den Luftzufuhrdurchgang strömt, und Innenraumluft, die durch den Luftabführdurchgang strömt, durchführen und
ein Durchgangstrennelement (13a, 13b, 13c), das den Luftzufuhrdurchgang und den Luftabführdurchgang trennt, wobei
eine Oberflächenseite des Körpergehäuses (1) in ihrer wesentlichen Gesamtheit als Öffnung (Ia) ausgebildet ist, wobei die Wärmetausch- und Belüftungseinrichtung (30) ferner eine Wartungsplatte (15, 16, 17) umfasst, die die Öffnung (Ia) von einer Vorderseite des Körpergehäuses (1) in einer anbringbaren/lösbaren Weise abdeckt, und
mindestens ein Teil eines des Luftzufuhrdurchgangs und des Luftabführdurchgangs auf einer Rückseite des anderen Luftdurchgangs in Bezug auf das Durchgangstrennelement (13a, 13b, 13c) ausgebildet ist, wobei die Rückseite der einen Oberflächenseite gegenüberliegt, **dadurch gekennzeichnet, dass**
im Wesentlichen der gesamte Bereich von mindestens einem des Luftzufuhrdurchgangs und des Luftabführdurchgangs der Öffnung (Ia) ausgesetzt ist, und
das Durchgangstrennelement (13a, 13b, 13c) durch die Öffnung (Ia) hindurch anbringbar und lösbar ist, und wenn das Trennelement (13a, 13b, 13c) entfernt wird, ein im Wesentlichen ganzer Bereich des Luftzufuhrdurchgangs und des Luftabführdurchgangs von der Öffnung (Ia) freigelegt ist, wobei
die Außenlufteinlassöffnung (2), die Luftzufuhrauslassöffnung (3), die Umwälzlufteinlassöffnung (4) und die Luftabführauslassöffnung (5) auf einer anderen Oberflächenseite ausgebildet sind, die sich von der einen Oberflächenseite unterscheidet.

2. Wärmetausch- und Belüftungseinrichtung (30) nach Anspruch 1, wobei jeder des Wärmetauschers (14), des Luftzufuhrgebläses (9) und des Luftabführgebläses (11) durch die Öffnung (Ia) herausgezogen werden kann.

3. Wärmetausch- und Belüftungseinrichtung (30) nach Anspruch 1, wobei eine Schraube, die das Trennelement (13a, 13b, 13c) befestigt, sich in Farbe oder Größe von anderen darin verwendeten Schrauben unterscheidet.

## Revendications

1. Dispositif d'échange de chaleur et de ventilation (30) du type installé au sol, comprenant :
un boîtier de corps (1) qui constitue une enveloppe de corps ;
un passage d'approvisionnement en air qui s'étend à partir d'un orifice d'entrée de l'air extérieur (2) disposé sur le boîtier de corps (1), et servant d'extrémité d'entrée à un orifice de sortie d'approvisionnement en air disposé sur le boîtier de corps (1), et servant d'extrémité de sortie, et qui fournit l'air extérieur à l'intérieur par l'intermédiaire de l'intérieur du boîtier de corps (1) ;
un passage d'évacuation de l'air qui s'étend à partir d'un orifice d'entrée de l'air de circulation (4) disposé sur le boîtier de corps (1), et servant d'extrémité d'entrée à un orifice de sortie d'évacuation de l'air (5) disposé sur le boîtier de corps (1), et servant d'extrémité de sortie, et qui évacue l'air intérieur à l'extérieur par l'intermédiaire de l'intérieur du boîtier de corps (1) ;
une soufflante d'approvisionnement en air (9) qui forme un flux d'approvisionnement en air dans le passage d'approvisionnement en air, qui est dirigé à partir de l'extrémité d'entrée vers l'extrémité de sortie de celui-ci ;
une soufflante d'évacuation de l'air (11) qui forme un flux d'évacuation de l'air dans le passage d'évacuation de l'air, qui est dirigé à partir de l'extrémité d'entrée vers l'extrémité de sortie de celui-ci ;
des échangeurs de chaleur (14) qui sont disposés dans le boîtier de corps (1), et qui exécutent un échange de chaleur entre l'air extérieur qui passe à travers le passage d'approvisionnement en air, et l'air intérieur qui passe à travers le passage d'évacuation de l'air, et
un élément partition de passage (13a, 13b, 13c) qui partitionne le passage d'approvisionnement en air et le passage d'évacuation de l'air, où
un côté surface du boîtier de corps (1) est réalisé de façon à être une ouverture (la) sensiblement en totalité,
où le dispositif d'échange de chaleur et de ventilation (30) comprend en outre un panneau de maintenance (15, 16, 17) qui couvre l'ouverture (la) à partir d'une surface avant du boîtier de corps (1) de façon à pouvoir être fixé / retiré, et
une partie au moins de l'un du passage d'approvisionnement en air et du passage d'évacuation de l'air, est formée sur un côté arrière de l'autre passage d'air par rapport à l'élément partition de passage (13a, 13b, 13c), le côté arrière étant opposé au côté surface,
**caractérisé en ce que**
sensiblement toute la surface de l'un au moins du passage d'approvisionnement en air et du passage d'évacuation de l'air, est exposée à l'ouverture (1a), et
l'élément partition de passage (13a, 13b, 13c) peut être fixé et retiré à travers l'ouverture (la), et lorsque l'élément partition (13a, 13b, 13c) est retiré, sensiblement toute la surface du passage d'approvisionnement en air et du passage d'évacuation de l'air, est exposée hors de l'ouverture (1a),
où l'orifice d'entrée de l'air extérieur (2), l'orifice de sortie d'approvisionnement en air (3), l'orifice d'entrée de l'air de circulation (4), et l'orifice de sortie d'évacuation de l'air (5), sont formés d'un autre côté surface différent du côté surface.

2. Dispositif d'échange de chaleur et de ventilation (30) selon la revendication 1, où n'importe lequel des échangeurs de chaleur (14), de la soufflante d'approvisionnement en air (9), et de la soufflante d'évacuation de l'air (11), peut être retiré à travers l'ouverture (1a).

3. Dispositif d'échange de chaleur et de ventilation (30) selon la revendication 1, où une vis de fixation de l'élément partition (13a, 13b, 13c), présente une couleur une dimension différente de celle des autres vis utilisées.
